# EUROPEAN PATENT APPLICATION

(11) **EP 4 604 354 A1**
(43) Date of publication of application: **20.08.2025**
(21) Application number: 25156527.1
(22) Date of filing: 07.02.2025
(51) Int. Cl.: H02J 7/35, H04W 4/38

(54) **POWER OPTIMIZATION IN REMOTE MONITORING DEVICES**

(30) Priority: 14.02.2024 FI 20245157
(71) Applicant: Nokia Solutions and Networks Oy, 02610 Espoo (FI)
(72) Inventor: KONTIO, Jari Pekka, Tampere (FI); TAIVALSAARI, Antero, Tampere (FI); AALTO, Antti, San Jose (US); VIITALA, Tomi, Siivikkala (FI)
(74) Representative: Nokia EPO representatives

(57) **Abstract**

System and method of environmental monitoring. In an embodiment, a remote monitoring device comprises power-consuming components comprising at least one sensor and a radio interface component, and a power source comprising a battery and a solar panel. The device stores mode information on operating modes defining differing levels of sensing capabilities and have different power consumption profiles. The device accumulates energy information regarding solar energy collected by the solar panel over a prior time period, obtains environmental information over a future time period, calculates estimated battery capacity data of the battery for the future time period based on the energy information and environmental information, calculates estimated operating times of the device when operating in the operating modes during the future time period based on the estimated battery capacity data and power consumption profiles, and selects between the operating modes during the future time period using the estimated operating times.

## Description

### Technical Field

This disclosure is related to the field of environmental monitoring, and more particularly, to the operation of remote monitoring devices of an environmental monitoring system.

### Background

Environmental monitoring in general is a process of observing an environment to assess conditions. For example, environmental monitoring may be used for air quality, water sampling, soil quality, noise level, etc. Environmental monitoring may also be used to detect harmful events, such as wildfires or other natural disasters. Environmental monitoring systems may use a variety of tools or equipment depending on the use case. For example, an environmental monitoring system may comprise a system of distributed monitoring or sensing devices that have wireless connectivity. One potential issue, however, is how to effectively operate these distributed monitoring devices in remote locations.

### Summary

Described herein is an environmental monitoring system comprising a plurality of remote monitoring devices configured for sensing (i.e., having one or more sensors) and wireless connectivity. In certain use cases, the remote monitoring devices are installed or placed at remote locations where solar power may be the sole source of power. Thus, the remote monitoring devices use an adaptive device controller that controls the behavior of a remote monitoring device to adjust or optimize energy consumption based on conditions experienced by the remote monitoring device. The adaptive device controller is able to adapt to the specific location/surrounding environment of a remote monitoring device, as well as environmental changes caused by seasonal variations. One technical benefit is that remote monitoring devices may operate in the remote locations for extended periods of time while providing an effective level of sensing capability. For example, the remote monitoring devices may be used for early detection of wildfires or other natural disasters. Another technical benefit is that remote monitoring devices are sensor-based, and provide a cost-effective option to image-based devices (e.g., camera, infrared, etc.) that have inherent limitations and higher power consumption profiles.

In an embodiment, a remote monitoring device comprises power-consuming components comprising at least one sensor, and a radio interface component configured for wireless connectivity. The remote monitoring device comprises a power source configured to provide power to the power-consuming components, where the power source comprises a battery, and at least one solar panel configured to charge the battery. The remote monitoring device comprises at least one processor, and at least one memory configured to store mode information on a plurality of operating modes defining differing levels of sensing capabilities by the at least one sensor, where the operating modes have different power consumption profiles. The memory further stores instructions that, when executed by the at least one processor, cause the remote monitoring device at least to accumulate energy information regarding solar energy collected by the at least one solar panel over a prior time period, obtain environmental information regarding a location of the remote monitoring device over a future time period, calculate estimated battery capacity data of the battery for the future time period based on the energy information and the environmental information, calculate estimated operating times of the remote monitoring device when operating in the operating modes during the future time period based on the estimated battery capacity data and the power consumption profiles, and select between the operating modes during the future time period using the estimated operating times.

In an embodiment, a method of environmental monitoring in a remote monitoring device is disclosed. The remote monitoring device comprises power-consuming components and a power source configured to provide power to the power-consuming components, where the power-consuming components comprise at least one sensor and a radio interface component configured for wireless connectivity, and the power source comprises a battery and at least one solar panel configured to charge the battery. The method comprises storing mode information on a plurality of operating modes defining differing levels of sensing capabilities by the at least one sensor, wherein the operating modes have different power consumption profiles, accumulating energy information regarding solar energy collected by the at least one solar panel over a prior time period, obtaining environmental information regarding a location of the remote monitoring device over a future time period, calculating estimated battery capacity data of the battery for the future time period based on the energy information and the environmental information, calculating estimated operating times of the remote monitoring device when operating in the operating modes during the future time period based on the estimated battery capacity data and the power consumption profiles, and selecting between the operating modes during the future time period using the estimated operating times.

Other embodiments may include computer readable media, other systems, or other methods as described below.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 is a block diagram illustrating an environmental monitoring system in an illustrative embodiment.
FIG. 2 illustrates communication of a remote monitoring device with a central controller in an illustrative embodiment.
FIG. 3 is a block diagram illustrating a remote monitoring device in an illustrative embodiment.
FIG. 4 illustrates a set of sensors implemented in a remote monitoring device in an illustrative embodiment.
FIG. 5 is a flow chart illustrating a method of performing environmental monitoring in an illustrative embodiment.
FIG. 6 illustrates mode information for a remote monitoring device in an illustrative embodiment.
FIG. 7 is a block diagram illustrating a device controller in operation in an illustrative embodiment.
FIG. 8 is a histogram representing energy information in an illustrative embodiment.
FIG. 9 is a graph illustrating a cloud cover forecast in an illustrative embodiment.
FIG. 10 is a graph illustrating cloud estimates in an illustrative embodiment.
FIG. 11 is a graph illustrating estimated battery capacity data in an illustrative embodiment.
FIG. 12 is a block diagram of a mode selector in an illustrative embodiment.
FIG. 13 is a flow chart illustrating a method of utilizing a Machine Learning (ML) system to select between operating modes in an illustrative embodiment.
FIG. 14 is a flow chart illustrating additional steps of the method in FIG. 5 in an illustrative embodiment.
FIG. 15 is a perspective view of a remote monitoring device in an illustrative embodiment.
FIG. 16 is a perspective view of a remote monitoring device mounted on a tripod in an illustrative embodiment.
FIG. 17 illustrates a plurality of remote monitoring devices deployed in a forest in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

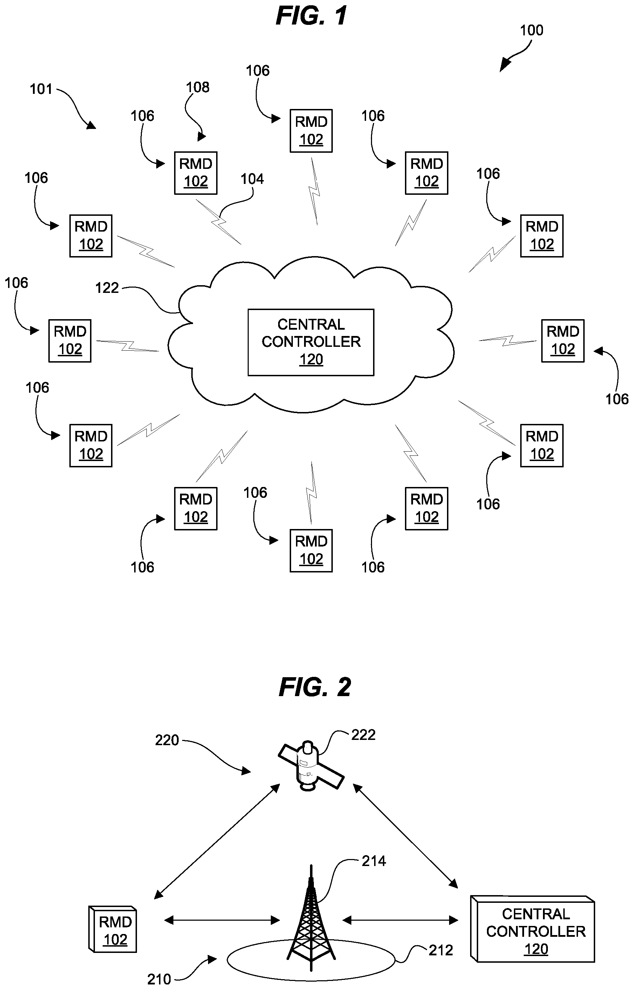

FIG. 1 is a block diagram illustrating an environmental monitoring system 100 in an illustrative embodiment. Environmental monitoring system 100 (also referred to as an environmental monitoring architecture) comprises a network of distributed devices configured to monitor a physical environment. In an embodiment, environmental monitoring system 100 comprises a plurality of remote monitoring devices 102 (RMD) that are deployed or installed at locations 106 (e.g., terrestrial locations on Earth). A remote monitoring device 102 is a type of device embedded with hardware, such as sensors, processors, etc., configured to perform sensing or detection functions/operations and configured for wireless connectivity. Environmental monitoring system 100 may also be referred to as an Internet of Things (IoT) network 101, and remote monitoring devices 102 may be referred to as IoT devices 108.

In an embodiment, environmental monitoring system 100 further comprises a central controller 120. Central controller 120 comprises a server, hub, system, etc., providing a centralized point for managing the remote monitoring devices 102. Central controller 120 may be implemented on a cloud-computing platform 122, on a hardware platform, on a combination of a cloud-computing platform 122 and a hardware platform, etc. Central controller 120 may send data or instructions/commands to the remote monitoring devices 102, may receive and/or analyze data reported by the remote monitoring devices 102, and/or perform other functions. While central controller 120 may be part of environmental monitoring system 100, remote monitoring devices 102 may be configured to operate generally independent from central controller 120 in some embodiments.

Remote monitoring devices 102 are equipped with sensing technology to collect data, and therefore may be referred to as sensor-based. For example, remote monitoring devices 102 (also referred to as remote environmental monitoring devices) may be equipped with one or more sensors configured to detect or measure environmental conditions. Remote monitoring devices 102 are also equipped with wireless connectivity or communication technology to transmit data over a communication network, such as to central controller 120, and/or to receive data over the communication network. In an embodiment, remote monitoring devices 102 are configured to communicate with central controller 120 (and possibly with each other) via radio or wireless links 104.

FIG. 2 illustrates communication of a remote monitoring device 102 with central controller 120 in an illustrative embodiment. From its location 106, a remote monitoring device 102 may communicate with central controller 120 via a Terrestrial Network (TN) 210, such as a cellular network 212 comprising one or more base stations 214. However, other types of terrestrial communications are considered herein, such as WiFi, Bluetooth, long range wide area network (LoRaWAN), etc. In an embodiment, remote monitoring device 102 may communicate with central controller 120 via a Non-Terrestrial Network (NTN) 220, illustrated with an NTN satellite 222. NTNs are networks, or segments of networks, using an airborne or space-borne vehicle to embark a transmission equipment relay node or base station.

Environmental monitoring system 100 as shown in FIG. 1 may be used as an early warning system, such as for natural disasters (e.g., wildfires/forest fires), health emergencies, and/or other types of situations.

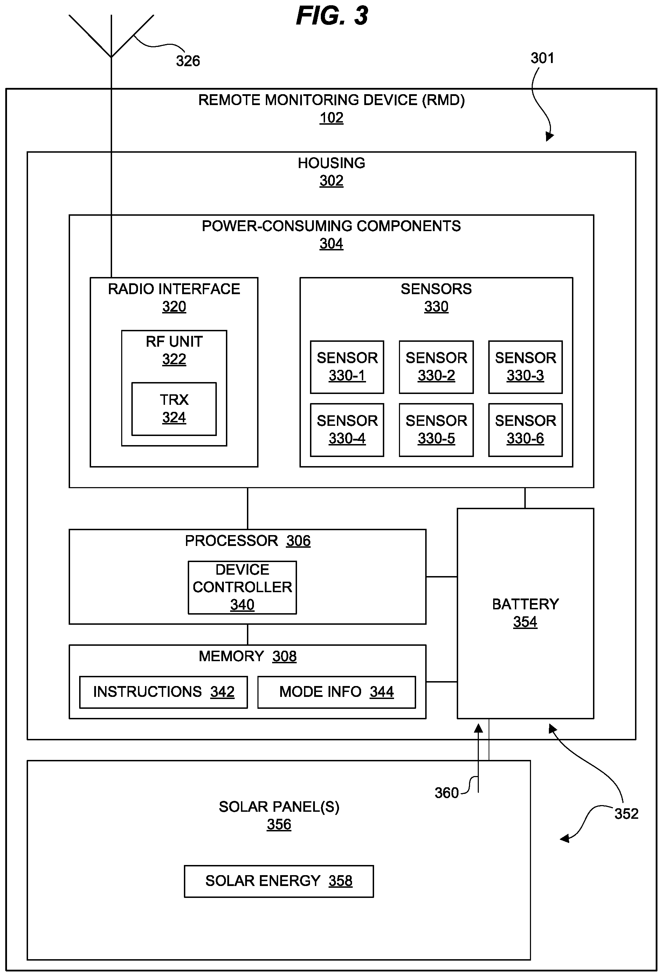

FIG. 3 is a block diagram illustrating a remote monitoring device 102 in an illustrative embodiment. Remote monitoring device 102 includes a device terminal 301 and one or more solar panels 356. Device terminal 301 includes a housing 302, which is a protective enclosure (e.g., weatherproof, waterproof, etc.) configured to protect internal equipment. Within housing 302, remote monitoring device 102 comprises a plurality of power-consuming components 304. A power-consuming component 304 is a type of hardware component or equipment that uses electrical power to operate. Power-consuming components 304 include a radio interface component 320, which is a hardware component or means that represents the local radio resources of the remote monitoring device 102 configured for wireless connectivity. In an embodiment, radio interface component 320 may comprise a Radio Frequency (RF) unit 322 (e.g., one or more radio transceivers (TRX) 324) and one or more antennas 326. RF unit 322 may be configured for 5G New Radio (NR), Long Term Evolution (LTE), WiFi, Bluetooth, LoRaWAN, etc. Power-consuming components 304 further include one or more sensors 330 (e.g., sensor 330-1, 330-2,..., 330-6). A sensor 330 is a device that detects or measures input from a physical environment, and outputs measurement data. Remote monitoring device 102 may include other power-consuming components 304 not specifically shown in FIG. 3 that are disposed within housing 302.

Device terminal 301 further comprises one or more processors 306 and a memory 308 disposed within housing 302. Processor 306 represents the internal circuitry, logic, hardware, means, etc., that provides functions of remote monitoring device 102. For example, processor 306 may execute a device controller 340 (also referred to as an adaptive device controller), which comprises a component or means for managing or controlling operations performed by remote monitoring device 102. Processor 306 may comprise microprocessor, a set of one or more processors, a multi-processor core, etc., depending on the particular implementation. Processor 306 may be configured to execute instructions 342 for software that are loaded into memory 308. Memory 308 is a non-transitory computer readable storage medium for data, instructions, applications, etc., and is accessible by processor 306. Memory 308 is a hardware storage device capable of storing information on a temporary basis and/or a permanent basis. Memory 308 may comprise a random-access memory, or any other volatile or non-volatile storage device. It is noted that processor 306 and/or memory 308 may also be considered a type of power-consuming component 304.

In an embodiment, remote monitoring device 102 may be deployed in remote locations where there is no reasonable access to an electrical grid. Thus, the power source 352 of remote monitoring device 102 comprises one or more batteries 354, and one or more solar panels 356. Solar panel 356 is configured to generate solar energy 358 by converting sunlight into electrical energy. The solar energy 358 generated by the solar panel 356 is used to charge the battery 354, and power the power-consuming components 304.

Remote monitoring device 102 may comprise various other components not specifically illustrated in FIG. 3.

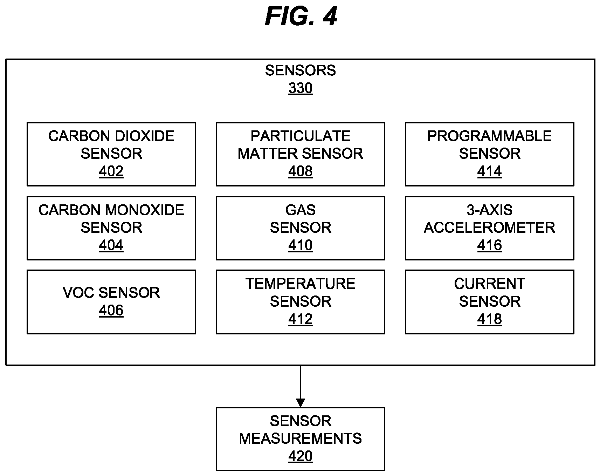

Remote monitoring devices 102 may include a comprehensive set of detection or sensing capabilities depending on the application. FIG. 4 illustrates a set of sensors 330 implemented in a remote monitoring device 102 in an illustrative embodiment. Sensors 330 may comprise a carbon dioxide (CO₂) sensor 402 configured to measure the concentration of carbon dioxide in the surrounding environment. Sensors 330 may comprise a carbon monoxide (CO) sensor 404 configured to measure the concentration of carbon monoxide in the surrounding environment. Sensors 330 may comprise a Volatile Organic Compound (VOC) sensor 406 configured to detect or measure off-gasses produced by various volatile organic compounds in the surrounding environment. Sensors 330 may comprise a particulate matter sensor 408 configured to detect or measure the quantity and/or concentration of dust particles in the surrounding environment. Sensors 330 may comprise a gas sensor 410 configured to detect or measure the concentration of various gases in the surrounding environment. Sensors 330 may comprise a temperature sensor 412 configured to measure the temperature in the surrounding environment. Sensors 330 may include a programmable sensor 414 having various gas composition recognition capabilities. The programmable sensor 414 may use onboard artificial intelligence (AI) or machine learning (ML) capabilities that are trained to detect various gas compositions, as well as ambient temperature, humidity, air pressure, general air quality measurements, etc. Sensors 330 may include a 3-axis accelerometer 416. Sensors 330 may include a current sensor 418 configured to measure charging current 360 generated by the solar panel(s) 356 (see FIG. 3) and used to charge the battery 354. The output from one or more of the sensors 330 comprise sensor measurements 420.

FIG. 4 provides an example of the types of sensors 330 that may be implemented in a remote monitoring device 102. However, the number and types of sensors 330 implemented in a remote monitoring device 102 may vary depending on the application or use case of the remote monitoring device 102.

In an embodiment, remote monitoring devices 102 may be intended for long-term use in remote locations 106 where there is typically no energy source available other than solar power. The amount of available solar energy 358 can vary considerably based on time of day, time of year, and overall device placement (e.g., remote monitoring devices 102 mounted on the ground, high up on a tree or pole, etc.). Factors such as tree canopy, other nearby vegetation, and/or fixed structures in the vicinity of each remote monitoring device 102 can also have a significant impact on available solar energy 358. Thus, the amount of available solar energy 358 can vary significantly from one remote monitoring device 102 to another based on their deployment location 106.

One factor for the overall success of a remote monitoring solution is the optimization of energy consumption in the remote monitoring devices 102. In an ideal scenario, remote monitoring devices 102 would run all sensors 330 in the fastest possible contiguous measurement mode in order to maximize detection. In practice however, it is not realistic to run all sensors 330 in the fastest possible measurement mode continuously because the amount of energy required by individual sensors 330 can vary considerably. Thus, the device controller 340 in the individual remote monitoring devices 102 adapts to conditions at the deployment location 106 to balance power consumption with sensing capabilities.

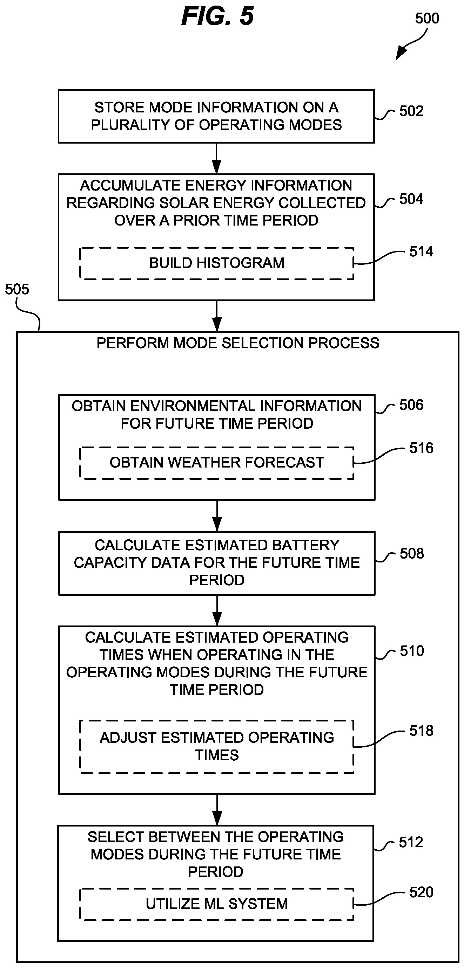

FIG. 5 is a flow chart illustrating a method 500 of performing environmental monitoring in an illustrative embodiment. The steps of method 500 will be described with reference to remote monitoring device 102 in FIG. 3, but those skilled in the art will appreciate that method 500 may be performed in other systems or devices. Also, the steps of the flow charts described herein are not all inclusive and may include other steps not shown, and the steps may be performed in an alternative order.

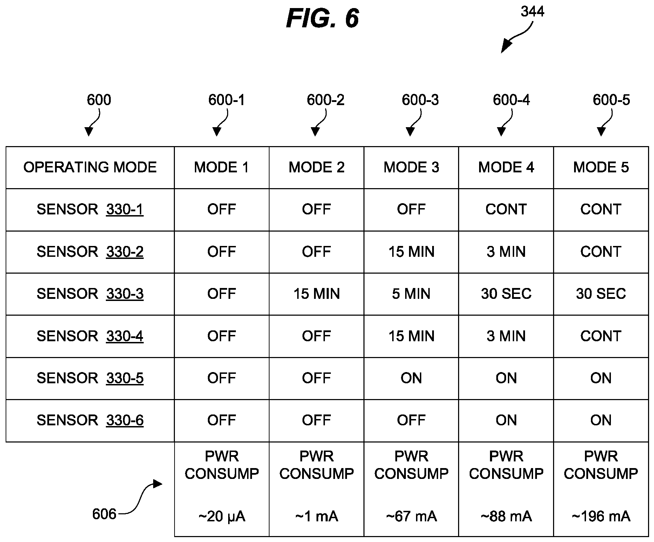

Remote monitoring device 102 stores mode information 344 on a plurality of operating modes for remote monitoring device 102 (step 502), such as in memory 308. An operating mode specifies a configuration of a remote monitoring device 102 characterized by the active functions performed. FIG. 6 illustrates mode information 344 for a remote monitoring device 102 in an illustrative embodiment. Mode information 344 defines or specifies multiple operating modes 600 (e.g., mode 600-1, 600-2,..., 600-5) that are predefined for a remote monitoring device 102. In an embodiment, the different operating modes 600 define differing levels of sensing capabilities by the sensor(s) 330. For example, mode 600-1 may represent a "hibernation" mode where each sensor 330 is "off" or deactivated. Mode 600-2 may represent a "standby" mode where sensor 330-3 is activated with a sampling rate of fifteen minutes, while other sensors 330 are "off" or deactivated. Mode 600-3 may represent a "normal" mode where sensors 330-2 thru 330-5 are activated with various sampling rates, while other sensors 330 are "off" or deactivated. Modes 600-4 and 600-5 may represent an "alert" mode and "emergency" mode, respectively, where each of the sensors 330 are activated with various sampling rates.

The overall energy consumption of remote monitoring device 102 can vary significantly depending on the operating mode 600. Thus, the mode information 344 may further define or specify a power consumption profile 606 for each operating mode 600. The power consumption profile 606 is an estimate or indication of the power consumed by power-consuming components 304 when operating in an operating mode 600. For example, the power consumption profiles 606 may be predefined based on an average measurement (e.g., a one-hour average) in similar remote monitoring devices 102. Also, device controller 340 may build or adjust the power consumption profiles 606 over time based on actual power consumption measurements or estimates. FIG. 6 illustrates some example power consumption values (e.g., ~ 20 µA, ~1 mA, ~67 mA, etc.) for the different operating modes 600 to illustrate that the operating modes 600 have different power consumption profiles 606.

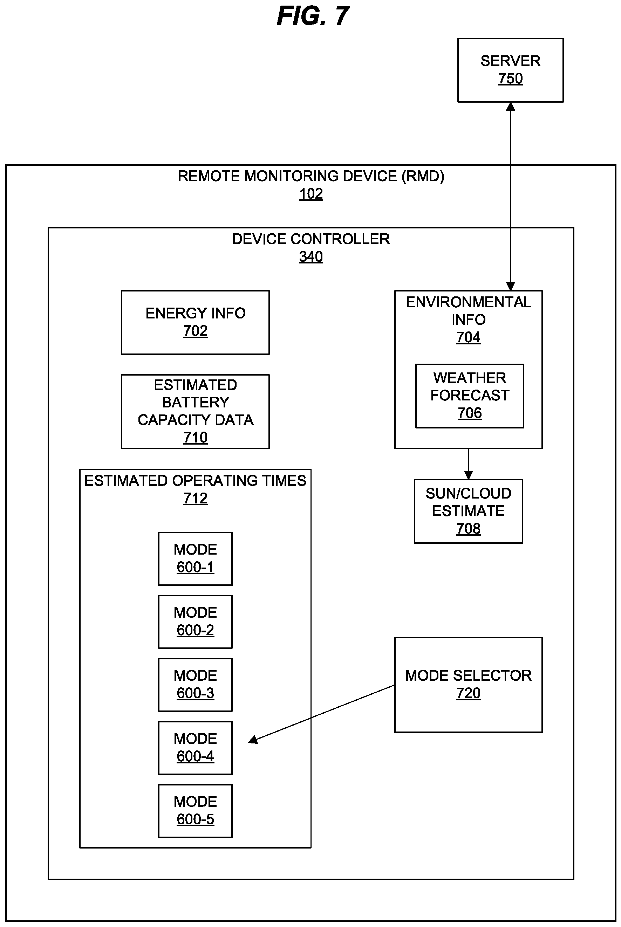

In FIG. 5, device controller 340 of remote monitoring device 102 collects or accumulates energy information regarding solar energy 358 collected by the solar panel 356 over a prior time period (step 504). FIG. 7 is a block diagram illustrating device controller 340 in operation in an illustrative embodiment. Device controller 340 accumulates energy information 702 over a number (n) of past or prior days, such as seven days, fourteen days, twenty-one days, etc. To accumulate the energy information 702, device controller 340 may receive measurement data from a current sensor 418 indicating the actual charging current 360 (mA) provided by solar panel 356 to charge the battery 354. Device controller 340 may receive the measurement data periodically (e.g., hourly) over a number (n) of past days.

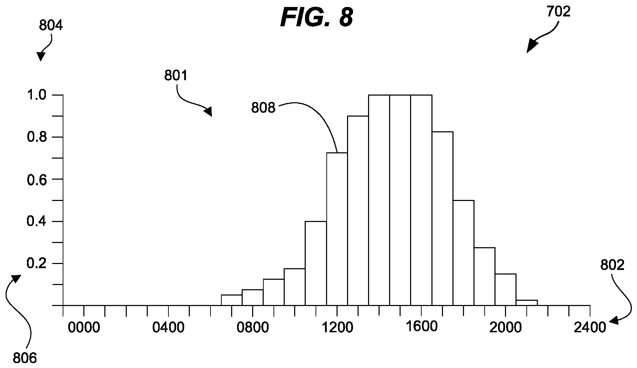

In an embodiment, device controller 340 may build a histogram representing the energy information 702 (optional step 514 of FIG. 5). FIG. 8 is a histogram 801 representing the energy information 702 in an illustrative embodiment. In an embodiment, histogram 801 indicates a moving average 808 of charging current 360 measured at the solar panel 356 for each time increment (e.g., hourly) over a number of past days. The horizontal axis in FIG. 8 represents the time increments 802 (e.g., hours), and the vertical axis represents charging current values 804. Device controller 340 may incrementally build histogram 801 (e.g., a graph comprising twenty-four segments representing available solar energy 358 at each hour of the day) based on the actual charging current 360 provided by solar panel 356. Because histogram 801 is based on the actual measured charging current 360, the histogram 801 reflects solar energy accumulation during a day, and automatically takes into account trees, vegetation, structures, etc., that may be blocking available sunlight around remote monitoring device 102 at certain times (hours) during the day. Histogram 801 is therefore specific to remote monitoring device 102 and the location 106 of the remote monitoring device 102. A moving average 808 over a number of past days for each time increment 802 may be used to average out significant daily variations in the available sunlight. One technical benefit is the histogram 801 represents a typical daily energy accumulation profile instead of being impacted by individual extremely sunny, cloudy, or rainy days. The charging current values 804 in histogram 801 may be represented as percentages 806 of the maximum possible charging current of the solar panel 356. Alternatively, charging current values 804 may be values between "0" and "1" (representing a multiplier against the maximum possible charging current), or another representation of charging current.

In FIG. 5, device controller 340 performs or triggers a mode selection process (step 505). The trigger for the mode selection process may vary as desired. For example, the mode selection process may be triggered upon expiration of a predefined time period. In another example, a condition or event may trigger the mode selection process, such as sensor measurements 420 (e.g., elevated concentration of gas or particulates in the surrounding environment, concentration of gas or particulates dropping below a threshold, etc.), an alert from an external server or neighboring remote monitoring device 102, a State of Charge (SoC) of the battery 354, etc.

For the mode selection process, device controller 340 obtains environmental information regarding the location 106 of remote monitoring device 102 over a future time period (step 506). As illustrated in FIG. 7, device controller 340 obtains environmental information 704 for the next or future number (m) of hours, such as twelve hours, twenty-four hours, forty-eight hours, etc. Device controller 340 may access an external server 750 (e.g., central controller 120, a server providing a weather service (e.g., National Oceanic and Atmospheric Administration (NOAA)), etc.) through radio interface component 320 to obtain the environmental information 704. In an embodiment, the environmental information 704 may comprise a weather forecast 706 for the location 106 of remote monitoring device 102 over the future time period (optional step 516 of FIG. 5). The weather forecast 706 may comprise a sunshine forecast, a cloudiness forecast, a cloud cover forecast, etc. For example, device controller 340 may query a weather service using the location 106 (e.g., Global Positioning System (GPS) coordinates) of remote monitoring device 102 as an input parameter.

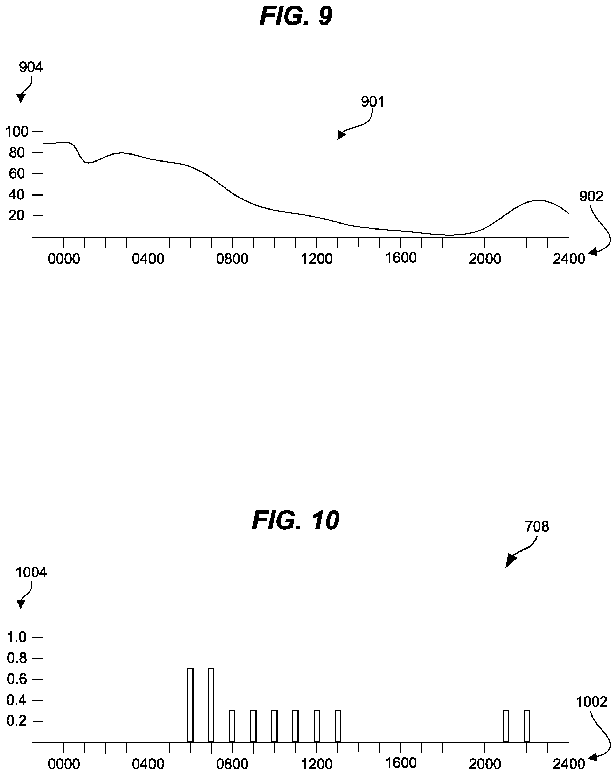

FIG. 9 is a graph illustrating a cloud cover forecast 901 in an illustrative embodiment. The horizontal axis in FIG. 9 represents the time increments 902 (e.g., hours in a day), and the vertical axis represents a percentage of cloud cover 904. Based on the weather forecast 706 (e.g., cloud cover forecast 901), device controller 340 may generate sun or cloud estimates 708 (see FIG. 7) for a future number of time increments (e.g., hours) at the location 106 of the remote monitoring device 102. FIG. 10 is a graph illustrating cloud estimates 708 in an illustrative embodiment. The horizontal axis in FIG. 10 represents the time increments 1002 (e.g., hours in a day), and the vertical axis represents cloud estimate values 1004. For example, the cloud estimate values 1004 may have a value of "1" for a sunny forecast, a value of "0.7" for a partly cloudy forecast, a value of "0.3" for a cloudy forecast, and a value of "0" for a precipitation forecast. These values are provided as examples, as the cloud estimates 708 may have other desired values. Further, device controller 340 may avoid generating cloud estimates 708 for nighttime hours since the amount of solar energy 358 harvested at nighttime is close to zero. One technical benefit is a weather forecast 706 (e.g., a cloud cover forecast 901) indicates how solar energy collection may be affected in the future.

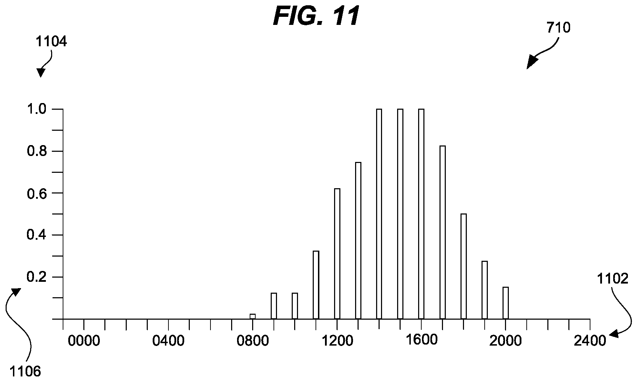

In FIG. 5, device controller 340 calculates estimated battery capacity data of the battery 354 for the future time period based on the energy information 702 and the environmental information 704 (step 508). As illustrated in FIG. 7, device controller 340 calculates the estimated battery capacity data 710 for a future number (m) of time increments (e.g., hours) based on the energy information 702 and the environmental information 704. For example, device controller 340 may use the histogram 801 indicating the moving average 808 of charging current 360 measured at the solar panel 356 over a number of past days, and the environmental information 704 (e.g., weather forecast 706) for the future number (m) of hours to calculate the estimated battery capacity data 710. The environmental information 704 may therefore comprise an adjustment factor to the moving average 808 of charging current 360 in time increments based on the weather forecast 706. FIG. 11 is a graph illustrating estimated battery capacity data 710 in an illustrative embodiment. The horizontal axis in FIG. 11 represents the time increments 1102 (e.g., hours in a day), and the vertical axis represents estimated battery capacity values 1104. For example, estimated battery capacity values 1104 may be represented as percentages 1106 of the maximum battery capacity (e.g., ampere hours (Ah)) of battery 354. Device controller 340 may therefore combine the averaged solar energy accumulation histogram 801 with the hourly cloud estimates 708 (e.g., multiplication factors) to generate hourly estimated battery capacity data 710.

In FIG. 5, device controller 340 calculates estimated operating times of remote monitoring device 102 when operating in one or more of the operating modes 600 during the future time period based on the estimated battery capacity data 710 and the power consumption profiles 606 (step 510). As illustrated in FIG. 7, device controller 340 may calculate estimated operating times 712 of remote monitoring device 102 for each of the operating modes 600. As described above, each operating mode 600 has a different power consumption profile 606. Thus, device controller 340 calculates an estimated operating time 712 for an operating mode 600 during the future time period based on the estimated battery capacity data 710 and the power consumption profile 606 for the operating mode 600. Device controller 340 may calculate the estimated operating times 712 on an hourly basis, a daily basis, and/or some other time interval.

Although the power consumption profiles 606 may provide estimated power consumption for remote monitoring device 102 in the operating modes 600, other factors may impact the actual power consumption in the operating modes 600. Thus, device controller 340 may adjust the estimated operating times 712 based on one or more other factors (optional step 518 of FIG. 5). For example, signal strength of radio interface component 320 may impact the actual power consumption. Thus, device controller 340 may adjust the estimated operating times 712 based on signal strength. Device controller 340 may also measure actual power consumption in one or more of the operating modes 600 over time, and adjust the estimated operating times 712 based on actual power consumption measurements. One technical benefit is device controller 340 may fine-tune the estimated operating times 712 to improve accuracy.

In FIG. 5, device controller 340 selects between the operating modes 600 during the future time period using the estimated operating times 712 (step 512). As illustrated in FIG. 7, device controller 340 may implement a mode selector 720 that selects between the operating modes 600 based on the estimated operating times 712. Mode selector 720 may use a variety of other information to select an operating mode 600 in addition to the estimated operating times 712. For example, mode selector 720 may use energy information 702, environmental information 704, sensor measurements 420, and/or other information as input parameters when selecting an operating mode 600. Mode selector 720 may be programmed with a selection algorithm that uses a set of thresholds and the input parameters (e.g., estimated operating times 712, energy information 702, environmental information 704, sensor measurements 420, etc.) to select an operating mode 600.

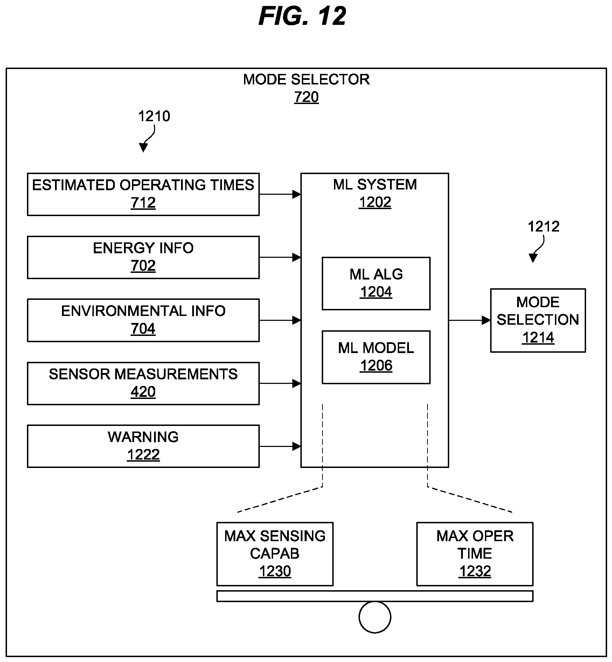

In an embodiment, mode selector 720 may implement or utilize a machine learning (ML) system to select between the operating modes 600 (optional step 520). FIG. 12 is a block diagram of a mode selector 720 in an illustrative embodiment. In an embodiment, mode selector 720 comprises an ML system 1202. In general, Artificial Intelligence (AI) is the simulation of human intelligence processes by machines, especially computer systems. Machine learning (ML) is a type of AI involving the use and development of computer systems that are able to learn and adapt without following explicit instructions, by using algorithms and statistical models to analyze and draw inferences from patterns in data. ML system 1202 may comprise circuitry, logic, hardware, software, means, etc., configured to use machine learning techniques to perform functions described for mode selector 720 and/or device controller 340. ML system 1202 may comprise an ML algorithm 1204, which is a procedure that is run on data to create an ML model 1206. For example, ML algorithm 1204 may perform pattern recognition on a dataset to learn from the dataset and generate ML model 1206. ML model 1206 is the output of the ML algorithm 1204, and comprises the model data and associated procedures/algorithms for making predictions or recommendations based on the model data. One technical benefit is ML system 1202 is configured to learn from data collected by remote monitoring device 102 to optimize the behavior of remote monitoring device 102 over time.

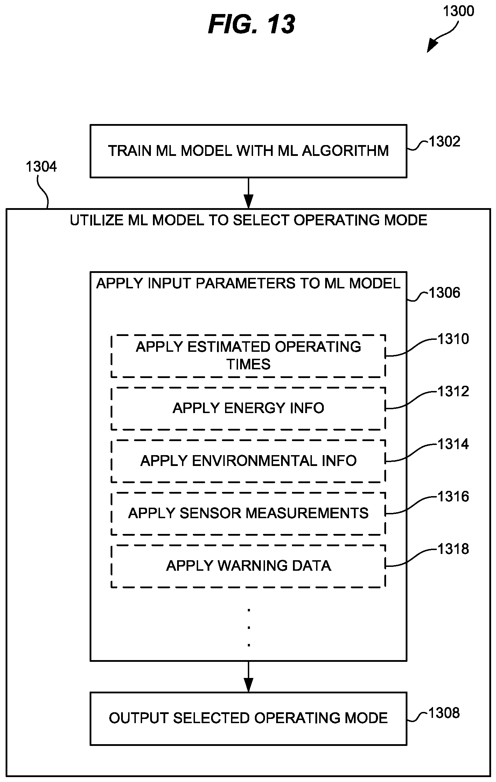

FIG. 13 is a flow chart illustrating a method 1300 of utilizing a ML system 1202 to select between operating modes 600 in an illustrative embodiment. ML system 1202 runs ML algorithm 1204 on a dataset to train ML model 1206 (step 1302). In an embodiment, ML algorithm 1204 may comprise an unsupervised learning algorithm, and the dataset may comprise historical data collected by remote monitoring device 102. ML system 1202 may retrain ML model 1206 on occasion, such as based on an updated dataset, model updates provided by central controller 120, etc.

In an embodiment, ML model 1206 (as trained) is configured to balance maximum sensing capabilities 1230 of the sensor(s) 330 with maximum operating time 1232 of the remote monitoring device 102 in selecting between the operating modes 600 (see also, FIG. 12). For example, a goal for the ML algorithm 1204 is to try to learn and reach an optimal balance between maximum sensing capabilities 1230 while allowing the remote monitoring device 102 to operate as long as possible even when new solar energy 358 is unavailable for a time period. The sensing capabilities refers to the number of sensors 330 activated and/or sampling rate of the sensors 330 in a remote monitoring device 102. Thus, the maximum sensing capabilities 1230 (also referred to as maximum detection readiness) may refer to a remote monitoring device 102 operating in the highest possible operating mode 600 with as many sensors 330 running contiguously as possible. Operating time 1232 refers to the amount of time that power-consuming components 304 are active or operating.

ML system 1202 then utilizes the ML model 1206 (as trained) to select operating modes 600 for remote monitoring device 102 (step 1304). To do so, ML system 1202 applies input parameters 1210 to ML model 1206 (step 1306). ML system 1202 may apply a variety of input parameters 1210 to the ML model 1206 when selecting an operating mode 600 for a particular time period (see FIG. 12). ML system 1202 may apply the estimated operating times 712 as an input parameter 1210 to the ML model 1206 (optional step 1310), as discussed above. ML system 1202 may apply energy information 702 (e.g., histograms 801) as an input parameter 1210 to the ML model 1206 (optional step 1312). Energy accumulation patterns might look different during different times/seasons of the year as obstacles (e.g., tree canopy) surrounding remote monitoring device 102 may block sunlight at different times when the sun is at higher or lower elevations in the sky. For example, energy information 702 accumulated over time may indicate that late fall and winter seasons result in lower amounts of solar energy 358, and it may be beneficial for the ML system 1202 to optimize remote monitoring device 102 towards maximum operating time 1232 during these seasons.

ML system 1202 may apply environmental information 704 as an input parameter 1210 to the ML model 1206 (optional step 1314). For example, if it is known that the next hours/days will be cloudy or rainy (i.e., little or no solar energy available), it may be beneficial for the ML system 1202 to optimize remote monitoring device 102 towards maximum operating time 1232. Conversely, if the next hours/days are known to be sunny (i.e., adequate solar power available), it may be beneficial for the ML system 1202 to optimize remote monitoring device 102 towards maximum sensing capability 1230. In another example, winter season, times of heavy rain/snow, and/or other conditions may represent minimal danger of wildfires, and it may be beneficial for the ML system 1202 to keep remote monitoring device 102 in the lowest operating mode 600 (e.g., hibernation mode) with as few sensors 330 running as possible in order to minimize energy consumption.

ML system 1202 may apply sensor measurements 420 as an input parameter 1210 to the ML model 1206 (optional step 1316). For example, when a sensor 330 detects a concentration of gas or particles in the surrounding environment that is above a threshold, it may be beneficial for the ML system 1202 to optimize remote monitoring device 102 towards maximum sensing capability 1230 (e.g., choosing an operating mode 600 that uses a broader variety of sensors 330 with faster sampling and data upload rates). ML system 1202 may apply external warning data 1222 or other external information as an input parameter 1210 to the ML model 1206 (optional step 1318). For example, wildfire warnings or the like may be available from external weather services or emergency services that may be used as an input parameter 1210.

ML system 1202 may apply other input parameters 1210 as desired. Based on the input parameters 1210 applied, the ML model 1206 outputs a selected operating mode 600 for remote monitoring device 102 (step 1308). As shown in FIG. 12, ML model 1206 generates output 1212 in the form of a mode selection 1214 for a configurable time period (e.g., one hour, six hours, twelve hours, twenty-four hours, etc.). One technical benefit is ML system 1202 is capable of independently and autonomously adapting to present conditions when selecting an optimal operating mode 600 for remote monitoring device 102.

ML system 1202 as shown in FIG. 12 may be implemented on-board remote monitoring device 102. In another embodiment, ML system 1202 may be implemented on an external device. For example, central controller 120 has more processing and storage resources than a remote monitoring device 102. Thus, central controller 120 may train the ML model 1206 based on historical data received from the remote monitoring device 102 over time, and provide the trained ML model 1206 to remote monitoring device 102. In another example, central controller 120 may utilize the ML model 1206 to provide updated thresholds or other data used by the selection algorithm in remote monitoring device 102. .

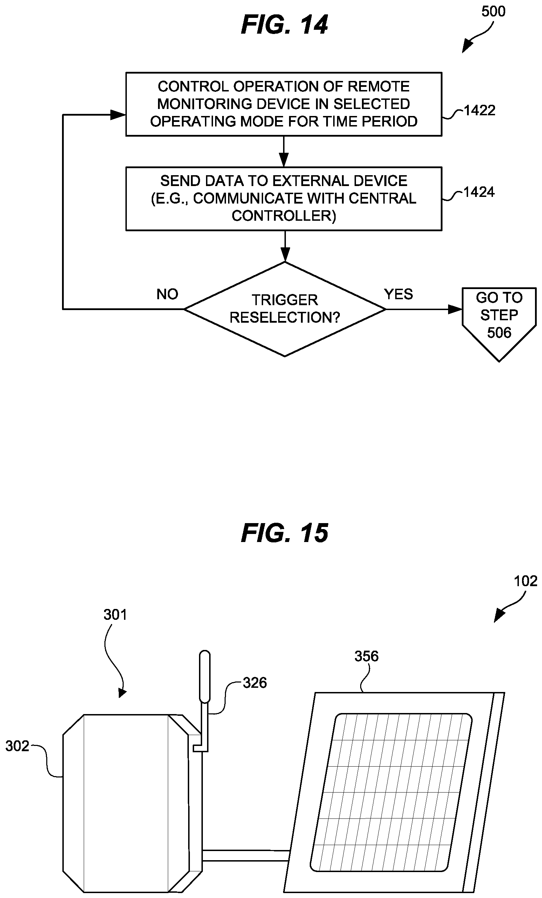

FIG. 14 is a flow chart illustrating additional steps of method 500 in an illustrative embodiment. After selecting the operating mode 600 for remote monitoring device 102, device controller 340 controls operation of remote monitoring device 102 in the selected operating mode 600 for a time period (step 1422), such as one hour, six hours, twelve hours, twenty-four hours, or some other time interval. Device controller 340 may send data (e.g., sensor measurements 420, alarm or alert signals, etc.) to an external device via radio interface component 320 (step 1424) during or after operation in the selected operating mode 600. For example, device controller 340 may report or upload sensor measurements 420 or other data to central controller 120, may receive instructions or commands from central controller 120, etc. In another example, device controller 340 may send data to a configurable address or destination (other than central controller 120), such as sending an alert signal to the nearest fire brigade or law enforcement, sending data to a neighboring remote monitoring device 102, etc.

To enable deployment of remote monitoring device 102 in a truly remote location, the remote monitoring device 102 may include a Message Queuing Telemetry Transport (MQTT) command interface. MQTT is a messaging protocol for low-bandwidth and high-latency devices. Through the MQTT command interface, central controller 120 may control individual sensors 330 of remote monitoring device 102 (e.g., activation/deactivation, sampling rates, etc.), may control data upload rates, optimize radio connectivity, etc. Central controller 120 may remotely control the remote monitoring device 102 (e.g., from the cloud) without requiring personnel to physically visit the location 106 of the remote monitoring device 102. However, it may be beneficial for the remote monitoring device 102 to behave as autonomously as possible.

When another trigger is detected, method 500 may return to step 506 in FIG. 5 to perform the mode selection process. One technical benefit of method 500 is remote monitoring devices 102 can effectively strike a balance between energy consumption and sensing capability, which allows the remote monitoring devices 102 to operate long-term in remote locations 106 where no energy source is available other than solar energy 358.

### Example

In the following example, additional processes, systems, and methods may be described in the context of environmental monitoring. The processes, systems, and methods described in this example may be incorporated in embodiments described above as desired.

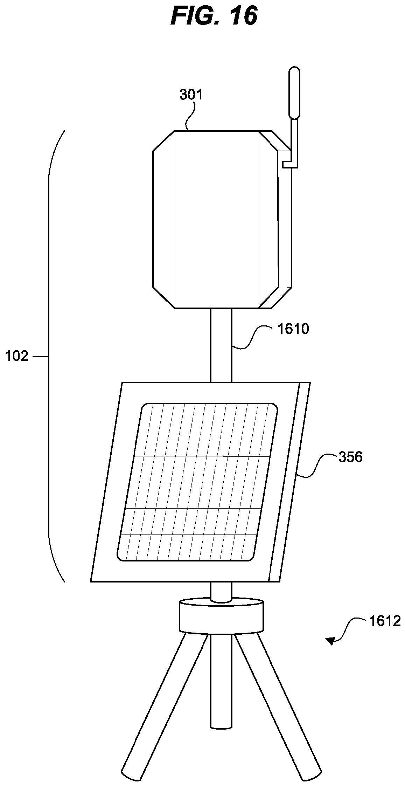

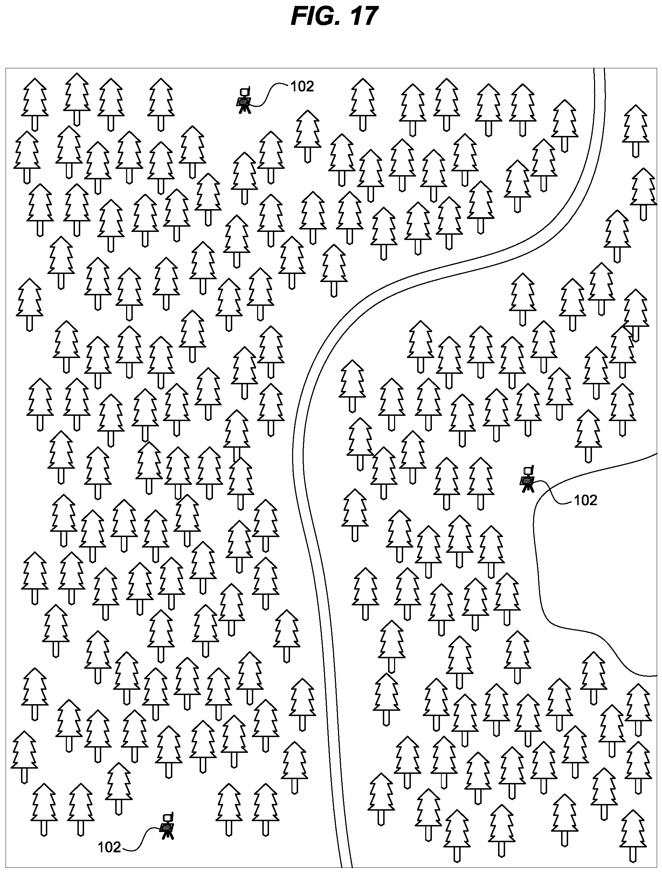

An example use case of remote monitoring devices 102 may be for an early warning system for wildfires/forest fires. Wildfires are some of the most destructive natural disasters in the world. Solar-powered remote monitoring devices 102 as described above may be deployed at remote locations to monitor for early signs of a wildfire. FIG. 15 is a perspective view of a remote monitoring device 102 in an illustrative embodiment. Remote monitoring device 102 includes a device terminal 301 and a solar panel 356. Device terminal 301 includes a housing 302 that houses sensitive internal equipment, such as sensors 330, processor 306, memory 308, radio interface component 320 (illustrated by antenna 326), etc. FIG. 16 is a perspective view of a remote monitoring device 102 mounted on a tripod 1612 in an illustrative embodiment. Device terminal 301 and solar panel 356 may be mounted on a pole 1610 of tripod 1612 as shown in FIG. 16. The assembly of the tripod 1612 and remote monitoring devices 102 may be deployed at a remote location 106. Although a tripod 1612 is shown, it is understood that a remote monitoring device 102 may be deployed or mounted in other ways, such as to a tree, a power pole, a building, etc. FIG. 17 illustrates a plurality of remote monitoring devices 102 deployed in a forest in an illustrative embodiment. Remote monitoring devices 102 may be deployed at strategic locations in or around the forest to provide early detection of a wildfire.

Other early warning systems may use image-based detection, such as camera-based, video-based, or satellite-based. However, these types of early warning systems have drawbacks related to their ability to perform fire detection early enough. Also, weather conditions such as heavy clouds, pollen, dust, or other airborne pollution can also reduce the effectiveness of these systems (especially for satellite-based systems). In addition, energy consumption of image-based systems can be excessive for deployment in remote locations where detection equipment will have to operate on solar power alone for months or possibly years without maintenance. The sensor-based system of remote monitoring devices 102 as described herein provide a cost-effective option for detection of wildfires, especially in their early, smoldering phases where potential savings are the greatest. The remote monitoring devices 102 as described herein are able to operate effectively via solar power by switching between the different operating modes 600 as discussed above.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. A remote monitoring device (102), comprising:
power-consuming components (304) comprising at least one sensor (330), and a radio interface component (320) configured for wireless connectivity;
a power source (352) configured to provide power to the power-consuming components, wherein the power source comprises a battery (354), and at least one solar panel (356) configured to charge the battery;
at least one processor (306); and
at least one memory (308) configured to store mode information (344) on a plurality of operating modes (600) defining differing levels of sensing capabilities by the at least one sensor, wherein the operating modes have different power consumption profiles (606);
the at least one memory further storing instructions (342) that, when executed by the at least one processor, cause the remote monitoring device at least to accumulate energy information (702) regarding solar energy (358) collected by the at least one solar panel over a prior time period;
the remote monitoring device **characterized in that** the at least one processor further causes the remote monitoring device at least to:
trigger a mode selection process within the remote monitoring device to:
obtain environmental information (704) regarding a location of the remote monitoring device over a future time period;
calculate estimated battery capacity data (710) of the battery for the future time period based on the energy information and the environmental information;
calculate estimated operating times (712) of the remote monitoring device when operating in the operating modes during the future time period based on the estimated battery capacity data and the power consumption profiles; and
select between the operating modes during the future time period using the estimated operating times, wherein
the mode selection process is triggered within the remote monitoring device based on sensor measurements (420) from the at least one sensor.

2. The remote monitoring device of claim 1, wherein the at least one processor further causes the remote monitoring device at least to:
build an hourly histogram (801) regarding the energy information indicating a moving average (808) of charging current (360) measured at the at least one solar panel for each hour over a number of prior days.

3. The remote monitoring device of claim 1, wherein
the mode selection process is triggered within the remote monitoring device based on an elevated concentration of gas or particulates in the sensor measurements from the at least one sensor.

4. The remote monitoring device of claim 1, wherein the at least one processor further causes the remote monitoring device at least to:
adjust the estimated operating times based on a signal strength of the radio interface component.

5. The remote monitoring device of claim 1, wherein the at least one processor further causes the remote monitoring device at least to:
adjust the estimated operating times based on actual power consumption measurements measured for one or more of the operating modes.

6. The remote monitoring device of claim 1, wherein the at least one processor further causes the remote monitoring device at least to:
utilize a machine learning system (1202) to select between the operating modes during the future time period using the estimated operating times as an input parameter (1210).

7. The remote monitoring device of claim 6, wherein:
the machine learning system is trained to balance maximum sensing capabilities (1230) of the at least one sensor with maximum operating time (1232) in selecting between the operating modes.

8. The remote monitoring device of claim 1, wherein
the mode selection process is triggered within the remote monitoring device based on an alert from an external server or neighboring remote monitoring device.

9. The remote monitoring device of claim 1, wherein
the mode selection process is triggered within the remote monitoring device based on a state of charge of the battery.

10. The remote monitoring device of claim 1, wherein:
the at least one sensor comprises at least one of:
a carbon dioxide sensor (402);
a carbon monoxide sensor (404);
a volatile organic compound sensor (406);
a particulate matter sensor (408);
a gas sensor (410); and
a temperature sensor (412).

11. A method (500) of environmental monitoring in a remote monitoring device comprising power-consuming components and a power source configured to provide power to the power-consuming components, wherein the power-consuming components comprise at least one sensor and a radio interface component configured for wireless connectivity, and the power source comprises a battery and at least one solar panel configured to charge the battery, the method comprising:
storing (502) mode information on a plurality of operating modes defining differing levels of sensing capabilities by the at least one sensor, wherein the operating modes have different power consumption profiles; and
accumulating (504) energy information regarding solar energy collected by the at least one solar panel over a prior time period;
the method **characterized by**:
triggering a mode selection process within the remote monitoring device by:
obtaining (506) environmental information regarding a location of the remote monitoring device over a future time period;
calculating (508) estimated battery capacity data of the battery for the future time period based on the energy information and the environmental information;
calculating (510) estimated operating times of the remote monitoring device when operating in the operating modes during the future time period based on the estimated battery capacity data and the power consumption profiles; and
selecting (512) between the operating modes during the future time period using the estimated operating times, wherein
the triggering comprises triggering the mode selection process within the remote monitoring device based on sensor measurements from the at least one sensor.

12. The method of claim 11, wherein the accumulating comprises:
building (514) an hourly histogram regarding the energy information indicating a moving average of charging current measured at the at least one solar panel for each hour over a number of prior days.

13. The method of claim 11, wherein
the triggering comprises triggering the mode selection process within the remote monitoring device based on an elevated concentration of gas or particulates in the sensor measurements from the at least one sensor.

14. The method of claim 11, further comprising:
adjusting (518) the estimated operating times based on a signal strength of the radio interface component.

15. The method of claim 11, further comprising:
adjusting (518) the estimated operating times based on actual power consumption measurements measured for one or more of the operating modes.
